Europäisches Patentamt

European Patent Office  (11) Numéro de publication: **0 200 148**

Office européen des brevets  **B1**

(12) **FASCICULE DE BREVET EUROPÉEN**

(19)

(45) Date de publication du fascicule du brevet:
12.07.89

(21) Numéro de dépôt: **86105577.0**

(22) Date de dépôt: **22.04.86**

(51) Int. Cl.⁴: **D 07 B 1/06,** B 60 C 9/00

(54) Assemblage de renfort avec une couche comportant un fil de forme ; articles comportant de tels assemblages.

(30) Priorité: **29.04.85 FR 8506874**

(43) Date de publication de la demande:
**05.11.86 Bulletin 86/45**

(45) Mention de la délivrance du brevet:
**12.07.89 Bulletin 89/28**

(84) Etats contractants désignés:
**AT BE CH DE FR GB IT LI LU NL SE**

(56) Documents cité:
**BE-A-654 919**
**BE-A-654 921**
**BE-A-654 923**
**BE-A-655 591**
**FR-A-965 538**
**FR-A-2 505 372**
**US-A-3 402 546**
**US-A-4 506 500**

(73) Titulaire: **MICHELIN & CIE (Compagnie Générale des Etablissements Michelin) Société dite:, 4 rue du Terrail, F-63000 Clermont- Ferrand (FR)**

(72) Inventeur: **Charvet, Jean- Louis, 25, rue Alfred de Musset, F-63000 Clermont- Ferrand (FR)**

(74) Mandataire: **Doussaint, Jean- Marie, MICHELIN & CIE Service K. Brevets, F-63040 Clermont- Ferrand Cedex (FR)**

LIBER, STOCKHOLM 1989

## Description

L'invention concerne les assemblages pour renforcer des matières et plus particulièrement les assemblages destinés à renforcer les matières plastiques ou les caoutchoucs.

De tels assemblages sont utilisés pour réaliser des articles qu'ils renforcent, par exemple des courroies, des tuyaux, des nappes, des enveloppes de pneumatiques.

Lorsque ces assemblages sont disposés dans des articles, il est important que ces assemblages soient totalement imprégnés par une matière, par exemple par la matière qu'ils doivent renforcer, cette matière pénétrant dans tous les espaces entre les fils constituant ces assemblages. En effet, si cette pénétration est incomplète, il se forme des canaux vides, le long des assemblages, et les agent corrosifs, par exemple l'eau, susceptibles de pénétrer dans les articles, notamment par suite de coupures, cheminent le long de ces canaux, ce qui provoque une détérioration des assemblages, par suite d'une corrosion, cette détérioration conduisant une détérioration des articles comportant ces assemblages.

Divers assemblages de fils ronds ont été proposés pour tenter de permettre une bonne pénétration de matière dans tous les espaces entre les fils de ces assemblages. De tels assemblages sont, par exemple, décrits dans les brevets ou demandes de brevets publiés sous les numéros suivantes FR-2 453 933, FR-2 505 372, FR-2 456 922, US-2 900 784, US-3 273 978, US-4 506 500, BE-654 921, BE-654 923. Ces assemblages conduisent à au moins un des inconvénients suivants:

- fabrication coûteuse à réaliser par suite de la complexité de la structure de l'assemblage;
- pénétration encore incomplète de telle sorte que les risques de détérioration subsistent.

Le brevet BE-655 591 décrit un câble constitué de fils ronds. Ce câble comporte une entourée d'une couche constituée alternativement de fils uniques et de torons, le diamètre de ces fils uniques ou de ces torons étant le même que celui de l'âme, dans le but de mieux régler la rigidité et la résistance à la fatigue. Ce câble présente encore une pénétration incomplète du caoutchouc qu'il est destiné à renforcer et sa réalisation est complexe.

Il est connu d'utiliser des fils plats ou des rubans pour renforcer des articles en caoutchouc, ces fils plats ou ces rubans étant utilisés seuls, ou en âme, ou torsadés ensemble, comme décrit par exemple dans les brevets GB-1 183 215, US-3 402 546, BE-654 919, FR-865 538.

Ces renforts sont coûteux à réaliser et/ou ils ne permettent pas d'éviter avec certitude les problèmes de corrosion par suite d'une pénétration incomplète du caoutchouc.

L'invention concerne donc un assemblage de renfort économique à réaliser qui permet une imprégnation totale par une matière, par exemple par la matière qu'il est destiné à renforcer.

En conséquence, l'assemblage de renfort conforme à l'invention est caractérisé en ce qu'il est constitué au moins en partie par un élément dont les caractéristiques sont les suivantes:

a) il comporte une seule couche de fils formant un toron ou une couche de fils formant un toron entouré par une ou deux couches de fils;

b) au moins une couche, dite "couche fil de forme", est constituée, au moins en partie, par un fil rond et par un fil de forme;

c) le pas de vrillage de chaque fil de forme est différent du pas de l'enroulement de ce fil de forme dans la couche où il se trouve;

d) si l'élément comporte plus d'une couche, au moins la couche centrale est une couche à fil de forme;

e) si l'élément comporte trois couches, le pas d'enroulement de la couche externe est différent du pas d'enroulement de la couche sous-jacente;

f) si l'élément comporte une ou deux couches dépourvues de fils de forme, ces couches sont insaturées, c'est-à-dire qu'il existe au moins un espace entre deux fils voisin parmi les fils de ces couches.

L'invention concerne également l'assemblage de renfort précédemment défini lorsqu'il est imprégné d'une matière, cette matière remplissant tous les espaces entre les fils.

L'invention concerne aussi les articles comportant au moins un assemblage de renfort conforme à l'invention.

Les termes utilisés dans cette définition de l'assemblage de renfort conforme à l'invention seront expliquée en détail ultérieurement.

Les exemples qui suivent ainsi que les figures toutes schématiques du dessin correspondant à ces exemples sont destinés à illustrer l'invention et en faciliter la compréhension sans toutefois en limiter la portée.

Sur le dessin:

- la figure 1 représente en coupe un assemblage de renfort conforme à l'invention constitué par un seul élément comportant un fil de forme;
- les figures 2 et 3 représentent chacune une section du fil de forme de l'assemblage de renfort représenté à la figure 1;
- la figure 4 représente une série de coupes de l'assemblage de renfort représenté à la figure 1;
- la figure 5 représente la disposition des coupes de la figure 4 par rapport à l'axe de l'élément représenté à la figure 1;
- la figure 6 représente une série de coupes d'un assemblage de renfort qui n'est pas conforme à l'invention;
- la figure 7 représente une série de coupes d'un autre assemblage de renfort conforme à l'invention;
- les figures 8, 9, 10, 11 représentent chacune en coupe un autre assemblage de renfort conforme à l'invention.

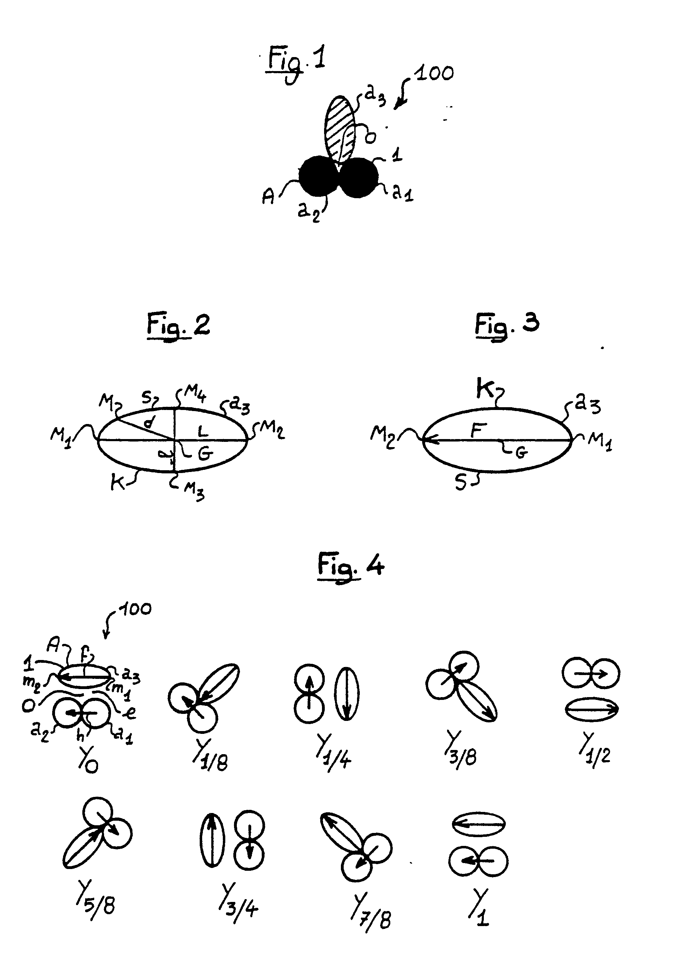

La figure 1 représente en coupe un assemblage de renfort 100 conforme à l'invention. Cet assemblage est constitué par un seul élément 1, lui-même constitué par une seule couche de fils, cette couche étant référencée A. Cette couche A dite "couche à fil de forme", est constituée par trois fils, deux fils ronds $a_1$, $a_2$ et un fil de forme $a_3$. Pour la clarté du dessin, les fils ronds $a_1$, $a_2$ sont représentés en noir et le fil de forme $a_3$ est représenté hachuré à la figure 1. Ces trois fils s'enroulent autour de l'axe de l'élément, cet axe étant référencé par la lettre 0 à la figure 1.

Les fils $a_1$, $a_2$ sont ronds, c'est-à-dire que la section de chacun de ces fils par un plan perpendiculaire à l'axe du fil est un cercle. Par définition, un fil de forme est un fil qui a les propriétés suivantes. Lorsqu'on le coupe par un plan quelconque perpendiculaire à la direction longitudinale du fil de forme, on obtient une section qui a un centre de gravité et un contour. La distance entre chaque point du contour et le centre de gravité varie suivant la position du point sur le contour.

A titre d'exemple, le fil de forme $a_3$ de l'élément 1 est un fil dont la section S précédemment définie est représentée à la figure 2. Cette section S a un centre de gravité G et un contour K. La distance "d" entre chaque point M du contour K et le centre de gravité G varie suivant la position du point M sur le contour K. La section S a par exemple une forme ovale avec deux dimensions extrêmes, une dimension maximum L et une dimension minimum "l". La dimension maximum L correspond à la longueur de la ligne $M_1M_2$ joignant les extrémités allongées $M_1$, $M_2$ de la section S et la dimension minimum "l" correspond à la longueur de la ligne $M_3M_4$ joignant les extrémités $M_3$, $M_4$ les plus proches entre elles de la section S, ces lignes $M_1M_2$, $M_3M_4$ passant par le centre de gravité G.

L'axe du fil de forme $a_3$ est défini par l'ensemble des centres de gravité G lorsque la section S se déplace le long du fil $a_3$. Cet axe est donc schématisé par la référence G à la figure 2. Cet axe est parallèle en tout point à la direction longitudinale du fil de forme même lorsque cet axe et cette direction ne sont pas rectilignes. Le pas d'enroulement des fils $a_1$, $a_2$, $a_3$ de la couche A est référencé $P_A$, et il représente le pas d'enroulement des fils $a_1$, $a_2$, $a_3$ autour de l'axe 0. Ce pas est un nombre algébrique, il est positif lorsque l'enroulement s'effectue dans un sens choisi arbitrairement comme positif, par exemple l'enroulement à droite, et négatif dans le cas inverse. La valeur absolue de ce pas, référencée $|P_A|$, est la longueur du pas d'enroulement des fils $a_1$, $a_2$, $a_3$ autour de l'axe 0, c'est-à-dire la longueur du pas ce pas $P_A$. Ce pas $P_A$ est le même pour les trois fils $a_1$, $a_2$, $a_3$ qui s'enroulent donc autour de l'axe 0 avec la même longueur de pas et dans le même sens, $|P_A|$ étant mesuré le long de l'axe 0 supposé rectiligne.

La longueur du pas de vrillage du fil de forme $a_3$ est la distance, mesurée le long de l'axe du fil de forme $a_3$, telle qu'elle correspond à une rotation d'un tour de la section S du fil de forme $a_3$ autour de son axe. La figure 3 représente une section S du fil de forme $a_3$, la flèche F joignant les deux extrémités allongées $M_1$, $M_2$ du fil de forme $a_3$, cette flèche étant orientée de l'extrémité $M_1$ vers l'extrémité $M_2$ et passant par l'axe du fil $a_3$. Cet axe est représenté par le centre de gravité G à la figure 3. Lorsque la distance mesurée le long de l'axe du fil de forme $a_3$ est égale à la longueur du pas de vrillage, la flèche F effectue une rotation d'un tour autour de cet axe. Le pas de vrillage $Pa_3$ du fil de forme $a_3$ est un nombre algébrique, ce pas étant positif lorsque le vrillage, c'est-à-dire la rotation de la flèche F, s'effectue dans le sens qui a été choisi arbitrairement comme positif, ce pas de vrillage étant négatif dans le cas contraire.

La valeur absolue du pas de vrillage $Pa_3$ est référencée $|Pa_3|$ et elle correspond à la longueur du pas de vrillage $Pa_3$. Les longueurs de pas d'enroulement et les longueurs de pas de vrillage correspondant à un même assemblage sont exprimés avec la même unité, par exemple le millimètre, dans toute cette description.

La figure 4 représente une série de neuf coupes de l'assemblage 100 conforme à l'invention, c'est-à-dire de l'élément 1. Chacune des coupes de la figure 4 est effectuée par un plan perpendiculaire à l'axe, supposé rectiligne, de l'élément 1. Chacune de ces coupes est référencée par la lettre Y suivie d'un nombre. La coupe d'origine est référencée $Y_0$ et chacune des autres coupes est référencée par la lettre Y suivie d'un nombre entier ou fractionnaire qui représente le rapport entre d'une part la distance séparant cette coupe de la coupe $Y_0$, et d'autre part la longueur du pas d'enroulement des fils $a_1$, $a_2$, $a_3$ autour de l'axe de l'élément 1, c'est-à-dire la longueur $|P_A|$ du pas $P_A$.

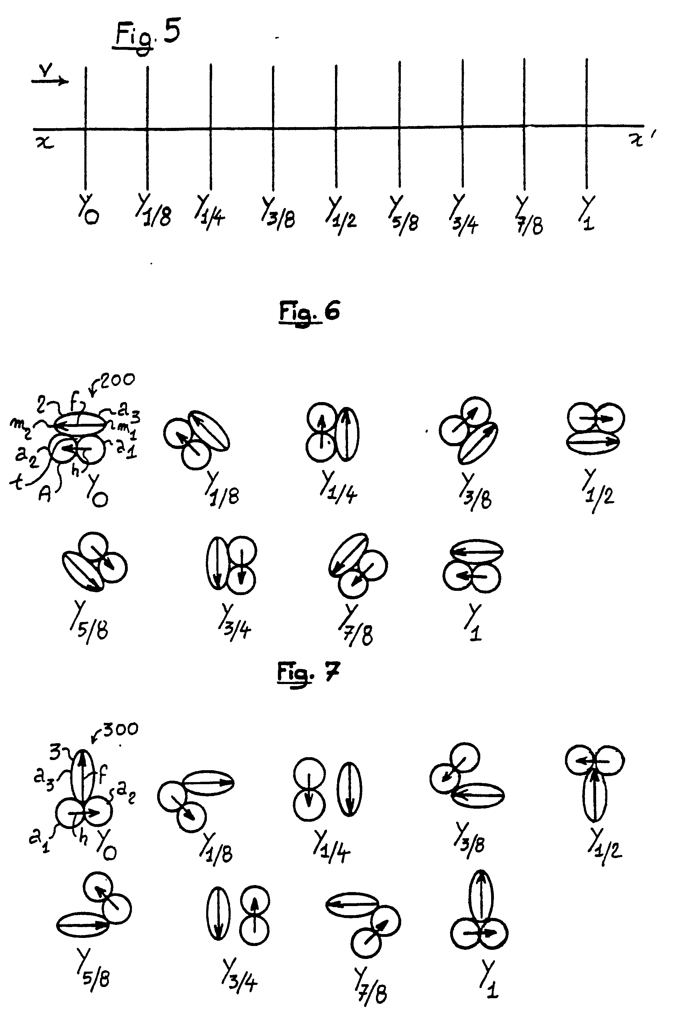

La figure 5 représente l'axe xx', supposé rectiligne, de l'élément 1, et les neuf coupes $Y_0$, $Y_{1/8}$, $Y_{1/4}$, $Y_{3/8}$, $Y_{1/2}$, $Y_{5/8}$, $Y_{3/4}$, $Y_{7/8}$, $Y_1$ de la figure 4 sont représentées par des segments de droite à la figure 5.

Toutes les coupes de la figure 4 sont regardées dans le même sens qui est le sens de la flèche V et le nombre qui suit la lettre Y augmente dans le sens de la flèche V, à la figure 5.

A titre d'exemple, la distance séparant les coupes $Y_1$ et $Y_0$ est égale à la longueur $|P_A|$. Pour la clarté du dessin à la figure 4, chaque section du fil de forme $a_3$ comporte une flèche "f" joignant les deux extrémités allongées $m_1$, $m_2$ du fil de forme $a_3$, la flèche "f" étant orientée de l'extrémité $m_1$ vers l'extrémité $m_2$, et chaque section de l'ensemble des fils ronds $a_1$, $a_2$ comporte une flèche "h" joignant les centres des cercles $a_1$, $a_2$ de cette section et orientée du centre correspondant au fil $a_1$ au centre correspondant au fil $a_2$, ces centres n'étant pas référencés dans un but de simplification.

Conformément à l'invention, les pas $P_A$ et $Pa_3$ sont différents. Ces pas sont par exemple reliés par la relation: $P_A = -Pa_3$, c'est-à-dire que le vrillage s'effectue en sens inverse de l'enroule-

ment des fils $a_1$, $a_2$, $a_3$, la longueur $|P_A|$ du pas d'enroulement étant égale à la longueur $|Pa_3|$ du pas de vrillage.

Cette différence de pas permet la formation intermittente d'espaces entre les fils $a_1$, $a_2$ d'une part et le fil $a_3$ d'autre part ce qui permet une bonne migration de matière dans tout l'assemblage 100, avec les avantages qui en découlent. On tel espace "e" est représenté à la coupe $Y_0$ de la figure 4.

A titre de comparaison, la figure 6 représente les mêmes coupes $Y_0$, $Y_{1/8}$, $Y_{1/4}$, $Y_{3/8}$, $Y_{1/2}$, $Y_{5/8}$, $Y_{3/4}$, $Y_{7/8}$, $Y_1$ pour un assemblage 200 non conforme à l'invention et constitué par un seul élément 2 identique à l'élément 1, mais avec la différence que l'on a la relation: $P_A = Pa_3$.

On voit sur cette figure 6 que les fils $a_1$, $a_2$, $a_3$ sont toujours au contact entre eux. Il y a donc formation d'un canal "t" entre les trois fils $a_1$, $a_2$, $a_3$. Ce canal "t" reste vide après imprégnation de l'assemblage 200 avec une matière qui ne peut pas pénétrer dans ce canal. Ce canal "t" est donc susceptible de permettre ultérieurement la migration d'agents corrosifs, par exemple l'eau, le long de l'assemblage 200 avec les inconvénients qui en découlent, notamment les risques de corrosion.

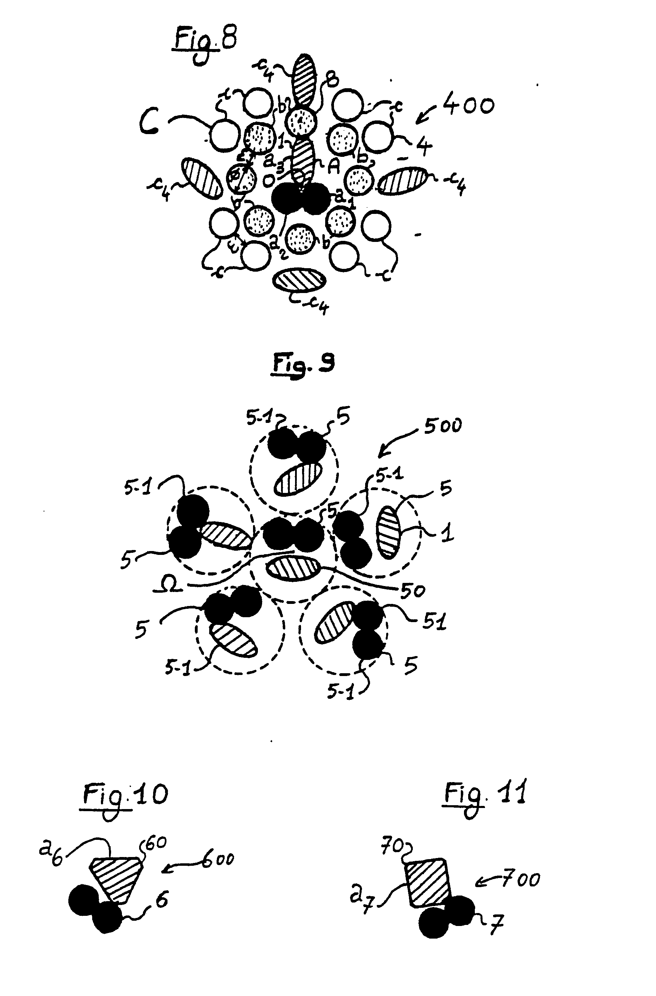

La figure 7 représente un autre assemblage 300 conforme à l'invention constitué par un seul élément 3, la figure 7 étant une série de neuf coupes $Y_0$, $Y_{1/8}$, $Y_{1/4}$, $Y_{3/8}$, $Y_{1/2}$, $Y_{5/8}$, $Y_{3/4}$, $Y_{7/8}$, $Y_1$ effectuées comme à la figure 4. L'élément 3 est identique à l'élément 1 représenté à la figure 4 avec la différence qu'on a la relation: $P_A = 2 Pa_3$, c'est-à-dire que le sens de vrillage du fil de forme $a_3$ est le même que le sens de l'enroulement des fils $a_1$, $a_2$, $a_3$ dans la couche A, mais que la longueur $|P_A|$ du pas d'enroulement de cette couche A est double de la longueur du pas de vrillage du fil de forme $a_3$.

Pour la clarté du dessin, les indices correspondant aux assemblages 100, 200, 300 ne sont portés que sur les coupes $Y_0$ des figures 4, 6, 7.

La figure 8 représente en coupe un autre assemblage conforme à l'invention. Cet assemblage 400 est constitué par un seul élément 4 qui comporte une âme identique à l'élément 1 représenté aux figures 1 et 4. Autour de la couche centrale A formée par cette 1, se trouve une couche B de huit fils ronds "b", cette couche B étant dépourvue de fil de forme, et une couche externe C disposée autour de la couche B, cette couche externe C étant constituée par huit fils ronds "c" et quatre fils de forme $c_4$. Le pas $P_B$ de la couche B et le pas $P_C$ de la couche C sont définis de façon analogue à ce qui a été dit précédemment pour la couche A. Chacune de ces couches s'enroule autour de l'axe de l'élément 4 représenté par le point 0 à la figure 8, la coupe de la figure 8 étant perpendiculaire à cet axe. Le pas d'enroulement $P_C$ de la couche externe C est différent du pas d'enroulement $P_B$ de la couche B sous-jacente pour éviter l'imbrication des fils de la couche B avec les fils de la couche C, car cette imbrication conduit à la formation de canaux susceptible de favoriser la corrosion. Dans l'assemblage 400 les couches A et C sont des couches à fil de forme.

La couche intermédiaire B est une couche insaturée, c'est-à-dire par définition qu'il existe au moins un espace $\varepsilon$ entre deux fils voisins parmi les fils "b", plusieurs de ces fils "b" pouvant être éventuellement au contact les uns des autres. La couche externe C est constituée alternativement par un fil de forme $c_4$ et par deux fils ronds "c". Cette couche C a été représentée insaturée, c'est-à-dire qu'il existe au moins un espace $\varepsilon$ centre deux fils ronds "c" voisins, mais elle pourrait être saturée, tous les fils ronds "c" voisins ayant alors entre eux un contact continu.

Conformément à l'invention, le pas de vrillage $Pc_4$ de chaque fil de forme $c_4$ est différent du pas de l'enroulement $P_C$ de la couche C. La présence des fils de forme $c_4$ liée au fait que le pas de vrillage de ces fils est différent du pas d'enroulement de la couche C permet la migration de matière qui peut traverser cette couche C et remplir tous les espaces à l'intérieur de l'assemblage 400 grâce à la différence de pas d'enroulement entre la couche externe C et la couche sous-jacente B, grâce à l'insaturation de la couche intermédiaire B et grâce à la structure de l'âme 1 précédemment décrite.

La figure 9 représente en coupe un autre assemblage 500 conforme à l'invention. Cet assemblage 500 est constitué par six torons identiques 5 chacun de ces torons étant un élément identique à l'élément 1 précédemment décrit et représenté aux figures 1 et 4. L'enveloppe de chacun de ces torons 5 est représentée par un cercle en pointillés à la figure 9, ce cercle n'étant pas référencé pour simplifier le dessin. Ces torons 5 sont disposés de telle sorte que l'un d'eux, référencé 50 constitue une âme, les cinq autres torons, référencées 5-1 constituant une couche 51 de torons 5-1 qui sont enroulés dans le même sens autour de l'axe de l'assemblage 500 de façon à constituer la couche 51, la coupe de la figure 9 étant effectuée perpendiculairement à l'axe de l'assemblage 500 cet axe étant représenté par la lettre $\Omega$ à la figure 9.

L'invention n'est pas limitée aux cas où les fils de forme des assemblages conformes à l'invention ont une section ovale. A titre d'exemple, les figures 10 et 11 représentent chacune un assemblage conforme à l'invention avec un fil de forme différent des fils de forme précédemment décrits.

La figure 10 représente en coupe un assemblage 600 conforme à l'invention constitué par un seul élément 6 identique à l'élément 1 représenté aux figures 1 et 4 avec la différence que le fil de forme $a_6$ de cet élément 6 a une section pratiquement triangulaire.

La figure 11 représente en coupe un assemblage 700 conforme à l'invention constitué par un seul élément 7 identique à l'élément 1 avec la différence que le fil de forme $a_7$ de cet élément 7 a une section pratiquement rectangulaire.

De préférence, les bords 60 du fil de forme $a_6$

et les bords 70 du fil de forme $a_7$ sont émoussés, comme représenté aux figures 10, 11, pour éviter des contraintes excessives dans la matière enrobant les assemblages 600, 700.

Les coupes des figures 1, 4, 6 à 8, 10, 11 sont effectuées chacune par un plan perpendiculaire à l'axe de l'élément.

Les assemblages conformes à l'invention peuvent comporter chacun plusieurs fils de forme de sections différentes, ces fils de forme étant disposés par exemple dans une même couche.

De préférence, au moins une partie des fils constituant les assemblages précédemment décrits sont métalliques.

Dans un assemblage conforme à l'invention, au moins une couche peut comporter, si on le désire, deux ou plus de deux fils de forme adjacents le pas de vrillage de chacun des fils de forme de cette couche étant de préférence différent du pas de vrillage des autres fils de forme qui lui sont adjacents dans cette couche, tout en étant, aussi, différent du pas d'enroulement de ce fil de forme dans cette couche.

De préférence, pour chaque fil de forme d'un assemblage conforme à l'invention, dans toute section perpendiculaire à la direction longitudinale de ce fil de forme, le rapport entre la plus grande dimension L de cette section et la plus petite dimension "l" de cette section est supérieur à 1,1.

Les assemblages conformes l'invention sont avantageusement utilisés dans le sommet des enveloppes de pneumatiques sous forme par exemple de nappes de renfort, les assemblages de chaque nappe étant notamment parallèles entre eux et en général croisés avec les assemblages d'une ou de plusieurs autres nappes.

Dans le cas d'un article en caoutchouc, par exemple une enveloppe de pneumatique, l'invention permet d'éviter une préimprégnation des assemblages de renfort avant leur incorporation dans cet article qu'ils doivent renforcer, car elle rend possible une migration complète de matière à l'intérieur des assemlages lors du moulage et/ou de la cuisson de cet article.

A titre d'exemple, on réalise un assemblage conforme à l'invention dont la constitution est la suivante. Il est entièrement constitué par deux couches de fils qui sont tous en acier.

- Une couche centrale A servant d'âme et analogue à l'élément 1 précédemment décrit, cette couche A étant constituée par deux fils ronds, de diamètre 0,350 mm et un fil de forme dont la section est analogue à celle du fil de forme $A_3$ représenté à la figure 2 avec les valeurs suivantes: L = 0,390 mm et 1 = 0,290 mm, c'est-à-dire qu'on a la relation L/l = 1,34; les trois fils de cette couche A sont enroulés vers la gauche avec une longueur de pas de 10 mm; le vrillage du fil de forme s'effectue vers la gauche, donc dans le même sens que l'enroulage des fils de la couche A, mais avec une longueur de pas de 7 mm, c'est-à-dire que le pas de vrillage de ce fil de forme est différent de son pas d'enroulement dans la couche A.

- Une couche externe B insaturée constituée par huit fils ronds de diamètre 0,350 mm, les fils de cette couche B étant enroulés vers la gauche avec une longueur de pas de 15 mm.

Cet assemblage peut être imprégné de façon pratiquement parfaite par du caoutchouc, sans formation de canaux vides susceptibles de provoquer une migration d'agents corrosifs.

Cet assemblage se caractérise donc par une très bonne résistance à la corrosion. Il est utilisé par exemple pour renforcer le sommet de l'enveloppe de pneumatique où il est incorporé.

Dans les assemblages conformes à l'invention, le nombre/de couches est au plus égal à trois pour permettre une bonne imprégnation par la matière d'enrobage.

De préférence, dans les assemblages conformes à l'invention, on a les relations suivantes:

- Dans chaque couche à fil de forme, le nombre de fils de forme est au plus égal à $\frac{2N}{3}$, N étant le nombre total de fils dans la couche considérée (c'est-à-dire le nombre total: fils ronds + fils de forme). On favorise ainsi une répartition homogène des efforts dans l'assemblage et on diminue le coût. Avantageusement le nombre de fils de forme, dans chaque couche à fil de forme, est au plus égal à N/2.

- Lorsque l'assemblage conforme à l'invention comporte au moins une couche insaturée dépourvue de fil de forme, le rapport $\varepsilon/\emptyset$ est au moins égal à 0,06 dans chacune de ces couches, $\varepsilon$ étant l'espace entre deux fils voisins, $\emptyset$ étant le diamètre des fils de cette couche, supposé le même pour tous ces fils, les espaces étant supposés répartis régulièrement entre tous les fils de cette couche, c'est-à-dire que la valeur $\varepsilon$ de ce rapport représente un espace moyen. On tel espace moyen $\varepsilon$ et le diamètre $\emptyset$ sont représentés à la figure 8, pour la couche B insaturée de l'assemblage 400 représenté sur cette figure.

- Lorsque, dans une couche à fil de forme, le vrillage du fil de forme s'effectue dans le même sens que l'enroulement de ce fil de forme dans la couche, le rapport

$$\frac{\text{(longueur du pas de vrillage)} - \text{(longueur du pas d'enroulement)}}{\text{(longueur du pas d'enroulement)}}$$

est, pour ce fil de forme, au moins égal à 0,2 en valeur absolue.

Les assemblages conformes à l'invention peuvent être réalisés avec des équipements connus et selon des procédés connus, ces équipements et ces procédés n'étant pas décrits dans un but de simplification. C'est ainsi par exemple que les fils de forme peuvent être réalisés en écrasant un fil rond, cet écrasement pouvant être réalisé notamment avec des rouleaux.

Bien entendu, l'invention n'est pas limitée aux exemples de réalisation précédemment décrits. C'est ainsi par exemple que les assemblages conformes à l'invention peuvent comporter d'autres constituants que les éléments précédemment décrits.

De tels constituants peuvent être par exemple une frette et/ou une âme entièrement constituée par un fil de forme, le pas de vrillage de cette âme étant alors différent du pas d'enroulement des fils de la couche entourant cette âme et la plus proche de cette âme.

**Revendications**

1. Assemblage de renfort caractérisé en ce qu'il est constitué au moins en partie par un élément dont les caractéristiques sont les suivantes:

a) il comporte une seule couche de fils formant un toron ou une couche de fils formant un toron entouré par une ou deux couches de fils;

b) au moins une couche, dite "couche à fil de forme", est constituée au moins en partie, par un fil rond et par un fil de forme;

c) le pas de vrillage de chaque fil de forme est différent du pas de l'enroulement de ce fil de forme dans la couche où il se trouve;

d) si l'élément comporte plus d'une couche, au moins la couche centrale est une couche à fil de forme;

e) si l'élément comporte trois couches, le pas d'enroulement de la couche externe est différent du pas d'enroulement de la couche sous-jacente;

f) si l'élément comporte une ou deux couches dépourvues de fils de forme, ces couches sont insaturées, c'est-à-dire qu'il existe au moins un espace entre deux fils voisins parmi les fils de ces couches.

2. Assemblage de renfort selon la revendication 1, caractérisé en ce qu'au moins une couche à fil de forme comporte deux, ou plus de deux, fils de forme adjacents, le pas de vrillage de chacun des fils de forme de cette couche étant différent du pas de vrillage des autres fils de forme qui lui sont adjacents dans cette couche.

3. Assemblage de renfort selon l'une quelconque des revendications 1 ou 2, caractérisé en ce que le rapport entre, d'une part, la plus grande dimension de la section du fil de forme et, d'autre part, la plus petite dimension de cette section, est supérieur à 1,1, cette section étant effectuée par un plan quelconque perpendiculaire à la direction longitudinale du fil de forme.

4. Assemblage selon l'une quelconque des revendications 1 à 3 caractérisé en ce que, dans chaque couche à fil de forme, le nombre de fils de forme est au plus égal à $\frac{2N}{3}$, N étant le nombre total de fils dans cette couche.

5. Assemblage selon la revendication 4 caractérisé en ce que, dans chaque couche à fil de forme, le nombre de fils de forme est au plus égal à N/2.

6. Assemblage selon l'une quelconque des revendications 1 à 5 caractérisé en ce que, dans chaque couche insaturée dépourvue de fil de forme, le rapport ε/Ø est au moins égal à 0,06, ε étant l'espace moyen entre deux fils voisins et Ø étant le diamètre des fils de cette couche.

7. Assemblage selon l'une quelconque des revendications 1 à 6, caractérisé en ce que, dans une couche à fil de forme, le vrillage du fil de forme s'effectue dans le même sens que l'enroulement de ce fil de forme dans la couche, et en ce que le rapport

$$\frac{\text{(longueur du pas de vrillage)} - \text{(longueur du pas d'enroulement)}}{\text{(longueur du pas d'enroulement)}}$$

est, pour ce fil de forme, au moins égal à 0,2 en valeur absolue.

8. Assemblage selon l'une quelconque des revendications 1 à 7 caractérisé en ce qu'il comporte une frette.

9. Assemblage selon l'une quelconque des revendcations 1 à 8 caractérisé en ce qu'il comporte une âme entièrement constituée par un fil de forme, le pas de vrillage de cette âme étant alors différent du pas d'enroulement des fils de la couche entourant cette âme et la plus proche de cette âme.

10. Assemblage selon l'une quelconque des revendications 1 à 9 caractérisé en ce qu'il est imprégné d'une matière, cette matière remplissant tous les espaces entre les fils.

11. Article comportant au moins un assemblage conforme à l'une quelconque des revendications 1 à 10.

12. Article selon la revendication 11 caractérisé en ce qu'il est une enveloppe de pneumatique.

13. Enveloppe de pneumatique selon la revendication 12 caractérisé en ce que l'assemblage est utilisé dans le sommet de cette enveloppe.

**Claims**

1. A reinforcement assembly characterized by the fact that it is formed at least in part of an element, said element having the following features:

a) it comprises either a single layer of threads forming a strand or a layer of threads forming a strand surrounded with one or two layers of threads;

b) at least one layer, known as "shaped thread layer" is formed, at least in part, of a round thread and a shaped thread;

c) the twist pitch of each shaped thread is different from the winding pitch of this shaped thread in the layer in which it is located;

d) if the element comprises more than one layer, at least the central layer is a shaped thread layer;

e) if the element comprises three layers, the winding pitch of the outer layer is different from the winding pitch of the subjacent layer;

f) if the element comprises one or two layers without shaped thread, these layers are unsaturated, i.e., there is at least one space between two adjacent threads, among the threads of these layers.

2. A reinforcement assembly according to claim 1, characterized by the fact that at least one shaped thread layer comprises two, or more than two, adjacent shaped threads, the twist pitch of each of the shaped threads of this layer being different from the twist pitch of the other shaped threads which are adjacent to it in said layer.

3. A reinforcement assembly according to any one of claims 1 or 2, characterized by the fact that the ratio between, on the one hand, the maximum dimension of the section of the shaped thread, and, on the other hand, the minimum dimension of this section, is greater than 1.1, this section being taken along any plane perpendicular to the longitudinal direction of the shaped thread.

4. An assembly according to any one of claims 1 to 3, characterized by the fact that, in each shaped thread layer, the number of shaped threads is at most equal to $\frac{2N}{3}$, N being the total number of threads in said layer.

5. An assembly according to claim 4 characterized by the fact that, in each shaped thread layer, the number of shaped threads is at most equal to N/2.

6. An assembly according to any one of claims 1 to 5, characterized by the fact that, in each unsaturated layer without shaped thread, the ratio $\varepsilon/\emptyset$ is at least equal to 0.06, where $\varepsilon$ is the average space between two adjacent threads and $\emptyset$ is the diameter of the threads of said layer.

7 An assembly according to any one of claims 1 to 6, characterized by the fact that, in a shaped thread layer, the twist of the shaped thread is in the same direction as the winding of said shaped thread in the layer, and by the fact that the ratio

$$\frac{\text{(length of twist pitch) - (length of winding pitch)}}{\text{(length of winding pitch)}}$$

for this shaped thread is at least equal to 0.2 in absolute value.

8. An assembly according to any one of claims 1 to 7, characterized by the fact that it comprises a wrap.

9. An assembly according to any one of claims 1 to 8, characterized by the fact that it comprises a core formed entirely of a shaped thread, the twist pitch of said core then being different from the winding pitch of the threads of the layer surrounding said core and closest to said core.

10. An assembly according to any one of claims 1 to 9, characterized by the fact that it is impregnated with a material, said material filling all the voids between the threads.

11. An article comprising at least one assembly according to any one of claims 1 to 10.

12. An article according to claim 11, characterized by the fact that it is a pneumatic tyre.

13. A pneumatic tyre according to claim 12, characterized by the fact that the assembly is used In the crown of said tyre.

## Patentansprüche

1. Verstärkungsanordnung, dadurch gekennzeichnet, daß sie zumindest teilweise aus einem Element mit den folgenden Kennzeichen besteht:

a) es weist eine einzige Schichte von Drähten auf, die eine Litze bilden oder eine Schichte von Drähten, die eine Litze bilden, die von einer oder zwei Drahtschichten umhüllt ist;

b) zumindest eine Schichte, die "Formdrahtschichte" genannt wird, besteht zumindest teilweise aus einem runden Draht und einem Formdraht;

c) der Drehschritt jedes Formdrahtes ist verschieden vom Schlingschritt dieses Formdrahtes in der Schicht, in der er sich befindet;

d) wenn das Element mehr als eine Schichte aufweist, ist zumindest die zentrale Schichte eine Formdrahtschichte;

e) wenn das Element drei Schichten aufweist, ist der Schlingschritt der äußeren Schichte unterschiedlich vom Schlingschritt der benachbarten darunterliegenden Schichte;

f) wenn das Element eine oder zwei Schichten ohne Formdraht aufweist, sind diese Schichten ungesättigt, d.h., daß zwischen zwei benachbarten Drähten dieser Schichten zumindest ein Raum bleibt.

2. Verstärkungsanordnung nach Anspruch 1, dadurch gekennzeichnet, daß zumindest eine Formdrahtschichte zwei oder mehr als zwei benachbarte Formdrähte aufweist, wobei der Drehschritt jedes dieser Formdrähte dieser schichte unterschiedlich vom Drehschritt der anderen, ihm benachbarten Formdrähte dieser Schichte ist.

3. Verstärkungsanordnung nach einem der Ansprüche 1 oder 2, dadurch gekennzeichnet, daß das Verhältnis zwischen der größten Abmessung des Querschnittes des Formdrahtes und der kleinsten Abmessung dieses Querschnittes größer ist als 1,1, wobei der Schnitt in einer beliebigen, rechtwinkelig auf die Längsrichtung des Formdrahtes stehenden, Ebene erfolgt.

4. Anordnung nach einem der Ansprüche 1 bis 3, dadurch gekennzeichnet, daß in jeder Formdrahtschicht die Anzahl der Formdrähte höchstens gleich ist 2N/3, wobei N die Gesamtanzahl der Drähte dieser Schichte ist.

5. Anordnung nach Anspruch 4, dadurch gekennzeichnet, daß in jeder Formdrahtschichte die Anzahl der Formdrähte höchstens gleich ist N/2.

6. Anordnung nach einem der Ansprüche 1 bis 5, dadurch gekennzeichnet, daß in jeder ungesättigten, formdrahtfreien Schichte das Verhältnis $\varepsilon/\emptyset$ zumindest gleich 0,06 ist, wobei $\varepsilon$ der mittlere Raum zwischen zwei benachbarten Drähten und $\emptyset$ der Durchmesser der Drähte dieser Schichte ist.

7. Anordnung nach einem der Ansprüche 1 bis 6, dadurch gekennzeichnet, daß in einer Formdrahtschichte die Verdrehung des Formdrahtes im gleichen Sinn erfolgt wie die Umschlingung dieses Formdrahtes in der Schichte und dadurch, daß der Absolutwert des Verhältnisses:

$$\frac{\text{(Länge des Drehschrittes) - (Länge des Schlingschrittes)}}{\text{(Länge des Schlingschrittes)}}$$

für diesen Formdraht zumindest gleich ist 0,2.

8. Anordnung nach einem der Ansprüche 1 bis 7, dadurch gekennzeichnet, daß sie eine Frette aufweist.

9. Anordnung nach einem der Ansprüche 1 bis 8, dadurch gekennzeichnet, daß sie eine Seele aufweist, die zur Gänze aus einem Formdraht besteht, wobei der Drehschritt dieser Seele unterschiedlich ist vom Schlingschritt der Drähte der Schichte, die diese Seele nächstliegend umhüllt.

10. Anordnung nach einem der Ansprüche 1 bis 9, dadurch gekennzeichnet, daß sie mit einem Material imprägniert ist, das sämtliche Leerräume zwischen den Drähten ausfüllt.

11. Gegenstand, der zumindest eine Anordnung nach einem der Ansprüche 1 bis 10 enthält.

12. Gegenstand nach Anspruch 11, dadurch gekennzeichnet, daß er eine Luftreifenhülle ist.

13. Luftreifenhülle nach Anspruch 12, dadurch gekennzeichnet, daß die verwendete Anordnung im Scheitel dieser Luftreifenhülle angeordnet ist.

Fig. 1

Fig. 2

Fig. 3

Fig. 4

1

Fig. 5

Fig. 6

Fig. 7

Fig. 8

Fig. 9

Fig. 10

Fig. 11